# EUROPÄISCHE PATENTSCHRIFT

(11) **EP 4 103 835 B1**
(45) Veröffentlichungstag und Bekanntmachung des Hinweises auf die Patenterteilung: **27.12.2023**
(21) Anmeldenummer: 21703745.6
(22) Anmeldetag: 12.02.2021
(51) Int. Cl.: F03D 3/06, F03D 7/06

(54) **ROTOR MIT ROTORBLÄTTERN**
ROTOR COMPRISING ROTOR BLADES
ROTOR COMPRENANT DES PALES DE ROTOR

(30) Priorität: 13.02.2020 EP 20157160
(43) Veröffentlichungstag der Anmeldung: 21.12.2022
(73) Patentinhaber: Jensen, Sebastian, 29459 Clenze (DE); Buddenhagen, Frank, 22397 Hamburg (DE)
(72) Erfinder: Jensen, Sebastian, 29459 Clenze (DE); Buddenhagen, Frank, 22397 Hamburg (DE)
(74) Vertreter: Zimmermann & Partner Patentanwälte mbB
(86) Internationale Anmeldenummer: PCT/EP2021/053485
(87) Internationale Veröffentlichungsnummer: WO 2021/160821

(56) Entgegenhaltungen:
- WO-A1-2012/020041
- DE-A1-102012 107 250
- JP-A- 2015 113 775
- KR-A- 20150 116 709

## Beschreibung

### TECHNISCHES GEBIET

Die vorliegende Offenbarung betrifft ein Rotorblatt, einen Rotor mit mindestens einem hierin beschriebenen Rotorblatt, sowie ein System mit einem hierin beschriebenen Rotor, Rotorblatt und einer elektrischen Maschine.

### STAND DER TECHNIK

Es sind Rotoren bekannt, die eine im installierten Zustand im Wesentlichen senkrecht verlaufende Rotationsachse aufweisen, durch welche eine Rotorwelle verläuft. An der Rotorwelle sind ein oder mehrere Rotorblätter befestigt, die auch als Flügel oder Blattschaufeln bezeichnet werden. Jedes der Rotorblätter stellt eine Angriffsfläche für eine Windkomponente bereit. Wenn die Windkomponente an der Angriffsfläche angreift, dreht sie den Rotor um die Rotationsachse in einer durch die Form der Rotorblätter definierten und damit vorab festgelegten Antriebsrichtung.

Ein solcher Rotor mit einer senkrecht verlaufenden Rotorwelle hat gegenüber Rotoren mit horizontaler Rotorwelle den Vorteil, dass eine Verschwenkung in Abhängigkeit der Windrichtung und/oder die Verstellung eines Anstellwinkels des Rotorblattes nicht erforderlich ist. Bekannte Rotoren mit senkrecht verlaufender Rotorwelle schließen beispielsweise einen Savoniusrotor, einen Darrieus-Rotor und einen H-Rotor ein. Bei einem H-Rotor sind die typischerweise mehreren Rotorblätter mit der Rotorwelle über mechanische Verbindungselemente verbunden und verlaufen im Wesentlichen parallel zur Rotorwelle.

Die aus dem Stand der Technik bekannten herkömmlichen Rotorblätter haben in der Regel eine Formgebung, welche weitgehend unabhängig von der zu einem jeweiligen Zeitpunkt vorliegenden Positionierung des Rotorblatts zur Windrichtung beim Angeströmtwerden eine Kraft in Antriebsrichtung auf die Rotorwelle übertragen. Dennoch besteht ein Bedürfnis, den Wirkungsgrad von bekannten Rotoren zu erhöhen.

Dokument JP 2015 113 775 A beschreibt einen Rotor mit vertikaler Rotorwelle und mehreren Rotorblättem. Dokument DE 10 2012 107 250 A1 beschreibt einen Rotor einer vertikalachsigen Windkraftanlage.

### ZUSAMMENFASSUNG DER ERFINDUNG

Zum Lösen der Aufgabe wird ein Rotor gemäß dem unabhängigen Anspruch 1 mit vertikaler Rotorwelle und mehreren in Umfangsrichtung äquidistant angeordneten, gleichartigen Rotorblättem angegeben. Vorteilhafte Weiterbildungen sind in den abhängigen Ansprüchen angegeben. Weiterbildungen, die den Rotor nach dem unabhängigen Anspruch 1 nutzen, sind ein System gemäß den Ansprüchen 11-12.

Erfindungsgemäß umfasst das Rotorblatt zum strömungsinduzierten Antreiben des Rotors in einer Antriebsrichtung eine Mehrzahl von in Antriebsrichtung hintereinander beabstandet angeordneten Anströmelementen, wobei jedes Anströmelement eine Vorderkante in Antriebsrichtung und eine Hinterkante in Antriebsrichtung umfasst, und wobei jede Hinterkante und jede Vorderkante zumindest in einem Haupt-Kraftübertragungsbereich jeweils so geformt ist, dass sie jeweils bei Anströmung von einer Windkomponente eine in Antriebsrichtung wirkende Antriebskraft auf den Rotor übertragen.

Die Antriebsrichtung, wie hierin verwendet, entspricht der Rotationsrichtung oder Drehrichtung des Rotors und ist durch die Anordnung und Formgebung des Rotorblatts bzw. der Rotorblätter vorbestimmt bzw. vorgegeben. Die Antriebsrichtung entspricht hierin auch der Umfangsrichtung der einzelnen Elemente, die um die zentrale vertikal verlaufende Rotorwelle herum angeordnet sind. Die Antriebskraft, wie hierin verwendet, ist stets die in Antriebsrichtung (in Rotationsrichtung) wirkende Kraft.

Wenn hierin von "Rotorblatt" die Rede ist, erfolgt die Beschreibung typischerweise für ein einziges Rotorblatt, wobei der Rotor mehrere identische oder mehrere gleichartige Rotorblätter aufweist, wie hierin beschrieben. Der Rotor weist mehrere Rotorblätter auf, wie hierin beschrieben, beispielsweise und ohne Einschränkung drei Rotorblätter. Die mehreren Rotorblätter sind in Umfangsrichtung äquidistant angeordnet. Beispielweise und ohne Einschränkung sind drei Rotorblätter in einem gegenseitigen Abstand von 120° in Umfangsrichtung angeordnet, wobei ein geeignetes Abstandsmaß z. B. der Winkel von radialen Linien durch vergleichbare Punkte auf zwei benachbarten Rotorblättern ist.

Ein Anströmelement, wie hierin verwendet, ist ein Bestandteil eines Rotorblattes. Insbesondere weist ein hierin beschriebenes Rotorblatt mehrere Anströmelemente auf. Die Offenbarung ist jedoch nicht so zu verstehen, dass ein (z. B. durchgehend ausgebildetes) Rotorblatt selbst ein (einziges) Anströmelement bildet und mehrere Rotorblätter dann eine Mehrzahl von Anströmelementen bilden würden. Vielmehr weist ein Rotorblatt bezogen auf den Gesamtumfang eines Rotors, der mit dem Rotorblatt versehen ist, eine vergleichsweise kompakte Ausdehnung auf, beispielsweise eine Ausdehnung in Umfangsrichtung von weniger als 70°, insbesondere von weniger als 60° und typischerweise von weniger als 50°. Ein solches kompaktes Rotorblatt weist dann die mehreren Anströmelemente auf.

Ein Anströmelement des Rotorblattes verläuft typischerweise im Wesentlichen parallel zur Rotorwelle. Das Anströmelement kann in der Richtung parallel zur Rotorwelle durchgehend, insbesondere einstückig ausgebildet sein. Ohne Einschränkung darauf kann das Anströmelement in der Richtung parallel zur Rotorwelle aber auch unterbrochen sein. Typischerweise verläuft das Anströmelement entlang großer Teile der Länge der Rotorwelle in Axialrichtung, beispielsweise mehr als 90% oder mehr als 95% der Gesamtlänge der Rotorwelle.

Haupt-Kraftübertragungsbereich, wie hierin verwendet, ist typischerweise ein Bereich, in welchem eine anströmende Windkomponente den größten Teil ihrer Kraft, beispielsweise mehr als 80% der theoretisch möglichen Kraft, auf das jeweilige Anströmelement überträgt.

Die Vorderkante des Anströmelements weist eine Form auf, die eine dynamische Strömungsform zumindest eines Teils des Rotorblatts beschreibt. Typischerweise weist jede Vorderkante die Form auf, die die dynamische Strömungsform zumindest eines Teils des Rotorblatts beschreibt. Die dynamische Strömungsform wird derart beschrieben, dass die Vorderkante dann, wenn der zu einem Zeitpunkt am Betriebsort des Rotors, der mit dem Rotorblatt ausgestattet ist, vorherrschende Wind eine Windkomponente aufweist, die das Anströmelement aus einer Richtung vorlicher als die Querabrichtung des Rotorblattes anströmt, die Antriebskraft durch einen dynamischen Strömungseffekt auf den Rotor überträgt. Der dynamische Strömungseffekt, mittels dessen die Antriebskraft auf den Rotor übertragen wird, ist beispielsweise ein dynamischer Auftriebseffekt, der durch die Installationsausrichtung des Rotorblattes beim Angeströmtwerden die Kraft in Antriebsrichtung ausübt. Als die Querabrichtung wird die Richtung angenommen, die ausgehend vom Achsmittelpunkt der Rotorwelle einen Mittelpunkt des Anströmelements radial schneidet. Ein Mittelpunkt des Anströmelements kann beispielsweise durch den mechanischen oder den mathematischen Schwerpunkt des Anströmelements definiert werden. Die Anströmrichtung ist vorlicher als die Querabrichtung, wenn der das jeweilige Anströmelement anströmende Wind bezogen auf die Rotationsrichtung des Rotors von vom kommt.

Eine Einhüllende der Mehrzahl von Anströmelementen beschreibt die dynamische Strömungsform des Rotorblatts. Unter einer Einhüllenden wird typischerweise eine Hüllfläche verstanden, die eine gemeinsame Fläche der äußersten Punkte der Kanten der Anströmelemente eines Rotorblattes bildet. In der Regel wird die Einhüllende durch eine gedachte geradlinige Verbindung der äußersten Kantenpunkte der Anströmelemente eines Rotorblattes gebildet. Die Einhüllende ist typischerweise eine gedachte Fläche, die sich ergeben würde, wenn die äußersten Kantenpunkte der Anströmelemente mit einer flexiblen Haut überspannt würde. Die Einhüllende ist somit nicht als reales Bauteil zu verstehen. Die Einhüllende dient der vereinfachten Beschreibung in Form eines Denkkonzeptes.

Die Vorderkante des Anströmelements beschreibt im Haupt-Kraftübertragungsbereich eine Fläche, die in Antriebsrichtung konvex gewölbt ist (eine in Antriebsrichtung konvexe Fläche). Auf ähnliche Weise beschreibt die Hinterkante des Anströmelements im Haupt-Kraftübertragungsbereich eine Fläche, die in Antriebsrichtung konkav gewölbt ist (eine in Antriebsrichtung konkave Fläche). Eine vorlicher als querab auftreffende Windkomponente trifft im Wesentlichen auf die Vorderkante auf und strömt entlang der konvex gewölbten Fläche, so dass aus ihr eine dynamische Strömungskraft herrührt, die in Antriebsrichtung wirkt und als in die Antriebsrichtung wirkende Antriebskraft auf den Rotor übertragen wird. Eine achterlicher als querab auftreffende Windkomponente trifft im Wesentlichen auf die Hinterkante auf, "verfängt" sich an der konkav gewölbten Hinterkante und übt eine Druckkraft in Antriebsrichtung aus, die als die in Antriebsrichtung wirkende Antriebskraft auf den Rotor übertragen wird.

Die konvexe Fläche und die konkave Fläche sind jeweils durchgehend gewölbt. Durchgehend gewölbt, wie hierin verwendet, beschreibt insbesondere eine im Wesentlichen von scharfen Kanten, Spitzen und/oder Ecken freie Oberfläche. Mit anderen Worten: Keine von konvexer Fläche und konkaver Fläche weist einen nicht-differenzierbaren Extremwert auf, und zwar in jeder Raumrichtung. Insbesondere ist jede von konvexer Fläche und konkaver Fläche im Wesentlichen an jedem Ort (in jedem ihrer Punkte) im mathematischen Sinne differenzierbar. Die oben beschriebenen Bedingungen dieser Ausführungsform gelten für die Bereiche der konvexen bzw. konkaven Fläche jenseits der jeweiligen Außenkanten, d. h. selbstverständlich enden die Flächen jeweils an ihren Außenkanten, wo diese Bedingungen dann nicht mehr erfüllt sind.

Die Einhüllenden-Außenseite weist zwischen der Mehrzahl von Anströmelementen im Wesentlichen in jedem Punkt einen konstanten radialen Abstand auf. Der Radius der Einhüllenden-Außenseite bezogen auf den Mittelpunkt des Rotors ist also zumindest überall zwischen der Mehrzahl von Anströmelementen sowie auf deren jeweiligen Außenkanten im Wesentlichen gleich. Insbesondere laufen die Anströmelemente zumindest an der Einhüllenden-Außenseite nicht spiralförmig in die radiale Mitte, sondern sie verlaufen im Wesentlichen konstant am Rotor-Äußeren entlang.

In Ausführungsformen weist die Hinterkante eines oder mehrerer, typischerweise sämtlicher Anströmelemente eine Angriffsfläche auf, deren Flächeninhalt größer ist als eine planare Fläche, die durch die in Antriebsrichtung am weitesten hinten liegenden Punkte des jeweiligen Anströmelements entlang einer Sekantenschar ausgehend von der Rotationsachse in Radialrichtung gezogen wird.

In Ausführungsformen beträgt ein Abstand zwischen der Vorderkante und der Hinterkante einer Mehrzahl der Anströmelemente weniger als 5 cm. Mit anderen Worten: Eine Materialstärke (z. B. eine Blechstärke) der Anströmelemente beträgt weniger als 5 cm. Typische Werte für die Materialstärke sind weniger als 3 cm oder weniger als 2 cm. Die Anströmelemente sind also dünn im Vergleich zur Gesamtausdehnung des jeweiligen Rotorblattes, das sie keinen Querwiderstand bilden, und zwar jeweils in Umfangsrichtung. Typischerweise gilt dies für eine Mehrzahl der Anströmelemente, vorzugsweise für sämtliche Anströmelemente des Rotorblattes, das sie bilden.

In Ausführungsformen weisen die Mehrzahl von Anströmelementen jeweils eine von deren äußeren und inneren Enden zur Mitte des jeweiligen Anströmelements zunehmende Materialstärke auf. Die Materialstärke der Anströmelemente kann dabei so ausgestaltet sein, dass sie eine Stromlinienform des jeweiligen einzelnen Anströmelements beschreibt bzw. unterstützt. Dies kann dazu beitragen, den Antrieb störende Verwirbelungen der auftreffenden Windkomponente zu reduzieren und/oder den Antrieb begünstigende Verwirbelungen der auftreffenden Windkomponente zu verstärken.

In Ausführungsformen sind die Anströmelemente derart in Antriebsrichtung hintereinander angeordnet, dass in Umfangsrichtung zwischen zwei benachbarten Anströmelementen ein Spalt mit einer jeweiligen Spaltbreite ausgebildet ist. Die Spaltbreite ermöglicht ein Eingreifen der Windkomponente zwischen den benachbarten Anströmelementen. Durch die Möglichkeit, dass die Windkomponente zwischen den benachbarten Anströmelementen eingreifen kann, trägt jedes Anströmelement für sich zur Erzeugung und Übertragung der Antriebskraft auf den Rotor bei, wodurch der Wirkungsgrad gesteigert werden kann.

In Ausführungsformen weisen jeweils zwei benachbarte Anströmelemente und typischerweise sämtliche benachbarten Anströmelemente desselben jeweiligen Rotorblatts eine derartige Spaltbreite auf und sind derart geformt, dass ein hindernis freier geradliniger Durchlass in einen Rotor-Innenbereich hinein besteht. Dies kann dazu beitragen, den Antrieb störende Verwirbelungen der auftreffenden Windkomponente zu reduzieren und/oder den Antrieb begünstigende Verwirbelungen der auftreffenden Windkomponente zu verstärken.

In Ausführungsformen weist ein Anströmelement, typischerweise jedes Anströmelement desselben Rotorblatts, einen Kraftübertragungs-Auslaufbereich mit einer zu dem Haupt-Kraftübertragungsbereich entgegengesetzten Krümmungsrichtung auf. Der Übergang zwischen den Krümmungsrichtungen vom Haupt-Kraftübertragungsbereich zum Kraftübertragungs-Auslaufbereich verläuft typischerweise in jedem Punkt differenzierbar. Ein derartiger Kraftübertragungs-Auslaufbereich kann dazu beitragen, dass den Antrieb störende Verwirbelungen der auftreffenden Windkomponente noch weiter reduziert werden und/oder dass den Antrieb begünstigende Verwirbelungen der auftreffenden Windkomponente noch weiter verstärkt werden.

In Ausführungsformen kann ein oder mehrere Parameter an Strömungsbedingungen angepasst werden, die im Regelbetrieb an einem bestimmten Installationsort zu erwarten sind. Alternativ oder zusätzlich kann der eine oder die mehreren Parameter an eine Größe des Rotorblattes angepasst werden, beispielsweise eine Ausdehnung des Rotorblattes in Richtung der Rotationsachse und/oder eine Ausdehnung des Rotorblattes in Umfangs- und/oder Radialrichtung. Der oder die Parameter umfassen typischerweise eine oder mehrere der folgenden Größen: Die Spaltbreite zwischen zwei benachbarten Anströmelementen; den Verlauf unterschiedlicher Spaltbreiten zwischen einer Mehrzahl benachbarter Anströmelemente; den Krümmungsradius eines Anströmelements; den Verlauf unterschiedlicher Krümmungsradien einer Mehrzahl von Anströmelementen; die Anzahl der Anströmelemente pro Rotorblatt.

In Ausführungsformen sind eines oder mehrere, typischerweise alle Anströmelemente des Rotorblatts und vorzugsweise das Rotorblatt insgesamt im Wesentlichen aus einem Metallmaterial gebildet. Das Metallmaterial ist typischerweise so gewählt, dass es wenig korrosiv für die am Installationsort zu erwartenden Bedingungen ist, robust ist (d. h. auch bei statischen und dynamischen Belastungen eine hohe zu erwartende Lebensdauer aufweist) und/oder eine angemessene spezifische Masse aufweist. Ein Beispiel für ein typischerweise verwendetes Metallmaterial ist ein Edelstahlmaterial.

In einer Weiterbildung des Rotors ist die Anzahl der Rotorblätter für den Rotor an im Regelbetrieb zu erwartende Strömungsbedingungen an einem Installationsort und/oder an eine Größe des Rotorblattes angepasst, beispielsweise eine Ausdehnung der Rotorblätter in Richtung der Rotationsachse und/oder eine Ausdehnung der Rotorblätter in Umfangs- und/oder Radialrichtung.

Gemäß einem weiteren Aspekt wird ein System angegeben. Das System umfasst einen hierin beschriebenen Rotor und eine elektrische Maschine. Die Rotorwelle des Rotors ist mechanisch an eine Maschinenwelle der elektrischen Maschine gekoppelt. Die elektrische Maschine ist typischerweise zumindest als Generator betreibbar, nimmt ein Drehmoment von der Rotorwelle über ihre Maschinenwelle entgegen und gibt an einer oder mehreren Generatorklemmen einen elektrischen Strom ab.

In einer Weiterbildung des Systems umfasst dieses ferner eine Steuerungseinheit zum Erfassen einer Drehzahl der Maschinenwelle und/oder der Rotorwelle und zum Ansteuern der elektrischen Maschine wahlweise im generatorischen Betrieb und im motorischen Betrieb. Die Steuereinheit ist derart konfiguriert, dass sie die elektrische Maschine dann, wenn die erfasste Drehzahl über einen vorgegebenen Zeitraum einen vorgegebenen Schwellenwert unterschreitet, im motorischen Betrieb ansteuert.

Der Zeitraum kann beispielsweise ein Zeitraum sein, der 10 Sekunden oder weniger entspricht, beispielsweise 5 Sekunden oder weniger. Der Drehzahl-Schwellenwert kann beispielsweise eine Drehzahl von 10 Umdrehungen pro Minute oder weniger sein, beispielsweise 5 Umdrehungen pro Minute oder weniger. Diese Werte sind beispielhaft und nicht einschränkend zu verstehen. Typischerweise ist zumindest einer von dem Zeitraum und dem Drehzahl-Schwellenwert so gewählt, dass mit großer Wahrscheinlichkeit davon ausgegangen werden kann, dass der Rotor nicht in einen Haftreibungszustand übergeht.

### KURZE BESCHREIBUNG DER ZEICHNUNGEN

Fig. 1 zeigt eine Schnittansicht eines Rotors mit Rotorblättern gemäß einer Ausführungsform, und zwar beim Schnitt durch den Rotor entlang einer Ebene senkrecht zur Axialrichtung des Rotors.
Fig. 2 zeigt die Schnittansicht aus Fig. 1 mit weiteren Erläuterungen;
Fig. 3 zeigt ein schematisches Diagramm eines Systems mit einem Rotor gemäß einer Ausführungsform und mit einer Steuerungseinheit;
Fig. 4 zeigt eine Schnittansicht analog zu Fig. 1 und Fig. 2 eines Rotors mit Rotorblättern gemäß einer Ausführungsform;
Fig. 5 zeigt ein Anströmelement mit einem Haupt-Kraftübertragungsbereich; und
Fig. 6 zeigt ein Anströmelement mit einem Haupt-Kraftübertragungsbereich und einem Kraftübertragungs-Auslaufbereich.

### BESCHREIBUNG VON AUSFÜHRUNGSFORM(EN)

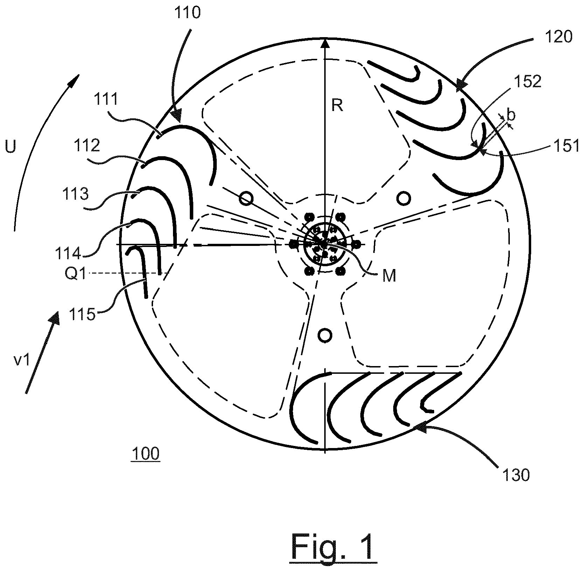

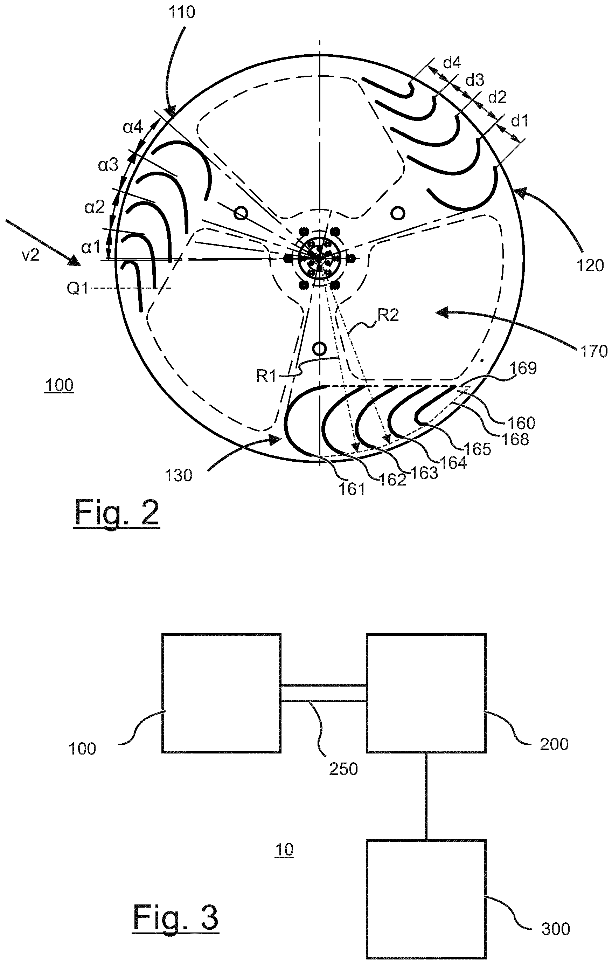

Fig. 1 und Fig. 2 sind eine Schnittansicht durch einen Rotor 100 entlang einer Ebene, die senkrecht zur Richtung einer Rotorwelle M des Rotors 100 verläuft. Die in Fig. 1 und Fig. 2 gezeigte Ausführungsform ist dieselbe, und Fig. 1 und Fig. 2 unterscheiden sich aus Gründen der Übersichtlichkeit nur in den zur Erläuterung bereitgestellten Beschriftungen und Bezugszeichen. Die folgende Beschreibung nimmt daher gleichzeitigen Bezug auf Fig. 1 und Fig. 2.

Die Rotorwelle M des Rotors 100 definiert gleichzeitig die Richtung der Rotationsachse, d. h. die Axialrichtung. In Radialrichtung R verlaufen Befestigungen, z. B. Streben (nicht dargestellt), an welchen jeweils ein erstes Rotorblatt 110, ein zweites Rotorblatt 120 und ein drittes Rotorblatt 130 bzw. dessen jeweilige Elemente befestigt sind, wie unten noch beschrieben. Es sei angemerkt, dass die Anzahl von Rotorblättern nicht auf drei beschränkt ist, sondern auch zwei, vier oder mehr als vier betragen kann. Ebenso ist in der Ausführungsform gemäß Fig. 1 gezeigt, dass die Rotorblätter 110, 120, 130 gleichartig konfiguriert sind. Wenn im Folgenden von "dem Rotorblatt 110, 120, 130" die Rede ist, schließt dies die jeweils beschriebene Konfiguration sämtlicher Rotorblätter 110, 120, 130 ein.

Der Rotor 100 rotiert durch die Anordnung und Konfiguration der Rotorblätter 110, 120, 130 stets in der Rotationsrichtung, die in Fig. 1 mit dem Pfeil U der Umfangsrichtung angezeigt ist. Diese Rotationsrichtung bildet die Antriebsrichtung und ist demnach festgelegt.

Das Rotorblatt 110, 120, 130 umfasst eine Mehrzahl von Anströmelementen 111, 112, 113, 114, 115. Die Anzahl der Anströmelemente pro Rotorblatt 110, 120, 130 ist nicht auf fünf beschränkt, und es können auch weniger oder mehr als fünf Anströmelemente bereitgestellt sein. Die mehreren Anströmelemente 111, 112, 113, 114, 115 eines Rotorblattes 110, 120, 130 sind voneinander in Umfangsrichtung U beabstandet angeordnet, beispielsweise in einem Winkelabstand α4 zwischen dem ersten oder vordersten Anströmelement 111 und dem zweiten Anströmelement 112 in Rotationsrichtung, einem Winkelabstand α3 zwischen dem zweiten Anströmelement 112 und dem dritten Anströmelement 113, einem Winkelabstand α2 zwischen dem dritten Anströmelement 113 und dem vierten Anströmelement 114 und einem Winkelabstand α1 zwischen dem vierten Anströmelement 114 und dem fünften Anströmelement 115. Ohne Beschränkung und lediglich beispielhaft gilt beispielsweise α1=8°, α2=11°, α3=11° und α4=13°.

Eine Querabrichtung Q1 ist beispielhaft für das fünfte Anströmelement 115 gezeigt. Als die Querabrichtung Q1 wird die Richtung angenommen, die ausgehend vom Achsmittelpunkt der Rotorwelle M einen Mittelpunkt des Anströmelements 115 radial (d. h. in Richtung R) schneidet. Eine Querabrichtung kann demnach für jedes Anströmelement 111, 112, 113, 114, 115 definiert werden.

Die Anströmelemente 111, 112, 113, 114, 115 sind jeweils so gekrümmt, dass sie in Antriebsrichtung eine Vorderkante 151 und eine Hinterkante 152 aufweisen. Im gezeigten Ausführungsbeispiel weisen die Anströmelemente eine dünne Materialstärke auf; dementsprechend sind die Vorderkante 151 und die Hinterkante 152 jeweils mit einem geringen Abstand b voneinander entfernt, der durch die Materialstärke definiert wird. Beispielsweise gilt b < 5 cm.

Die Anströmelemente 111, 112, 113, 114, 115 sind in dem Ausführungsbeispiel außerdem so angeordnet, dass einander benachbarte Elemente jeweils unter Ausbildung eines Spalts d1, d2, d3, d4 voneinander beabstandet sind.

Gemäß dem Ausführungsbeispiel beschreiben in der Schnittebene die äußeren Punkte 161, 162, 163, 164, 165 (und die jeweils gegenüberliegenden äußeren Punkte in Richtung der Rotorwelle M) eine dynamische Strömungsform oder einen Vortrieb in Antriebsrichtung bewirkende Stromlinienform 160. Die Stromlinienform 160 ist eine (gedachte) Einhüllende, die sich ergeben würde, wenn die äußeren Punkte 161, 162, 163, 164, 165 mit einer elastischen Haut überspannt würden, so dass sich eine Einhüllenden-Außenseite 168 ergibt, und die elastische Haut an der einem Rotor-Innenbereich 170 zugewandten Seite fortgesetzt würde, so dass sich eine Einhüllenden-Innenseite 169 ergibt. Es sei angemerkt, dass die Einhüllende 160 aus Einhüllenden-Außenseite 168 und Einhüllenden-Innenseite 169 nicht als reales Bauteil zu verstehen ist, sondern vielmehr der vereinfachten Beschreibung in Form eines Denkkonzeptes dient.

Die Einhüllenden-Außenseite 168 weist zwischen der Mehrzahl von Anströmelementen 111, 112, 113, 114, 115 im Wesentlichen in jedem Punkt einen konstanten radialen Abstand R1, R2 auf. Der Radius der Einhüllenden-Außenseite 168 bezogen auf den Mittelpunkt M des Rotors 100 ist also zumindest überall zwischen der Mehrzahl von Anströmelementen 111, 112, 113, 114, 115 sowie auf deren jeweiligen äußeren Punkten 161, 162, 163, 164, 165 im Wesentlichen gleich. Insbesondere laufen die Anströmelemente 111, 112, 113, 114, 115 zumindest an der Einhüllenden-Außenseite nicht spiralförmig auf den Mittelpunkt M des Rotors 100 zu, sondern sie verlaufen im Wesentlichen konstant am Rotor-Äußeren entlang.

Die Anströmelemente 111, 112, 113, 114, 115 bewirken durch ihre Formgebung, ihre Beabstandung bzw. die dazwischen liegenden Spalte, dass die Hinterkante 152 und die Vorderkante 151 jeweils so geformt sind, dass sie jeweils bei Anströmung von einer Windkomponente v1, v2 eine in Antriebsrichtung wirkende Antriebskraft auf den Rotor 100 übertragen.

Beispielhaft ist in Fig. 1 eine Windkomponente v1 gezeigt, die achterlicher als die Querabrichtung Q1 auf das Anströmelement 115 auftrifft. Gleichzeitig trifft die Windkomponente v1 auch achterlicher als Querab auf die weiteren zum Rotorblatt 110 gehörigen Anströmelemente 111, 112, 113, 114, 115 auf. Die das Rotorblatt 110 anströmende Windkomponente v1 kann durch die Beabstandung der Anströmelemente 111, 112, 113, 114, 115 durch die Spalte auf die jeweiligen Hinterkanten 152 einwirken und den Rotor 100 in Antriebsrichtung drücken.

In dem Beispiel in Fig. 2 ist eine Windkomponente v2 gezeigt, die vorlicher als die Querabrichtung Q1 auf das Anströmelement 115 auftrifft. Gleichzeitig trifft die Windkomponente v2 auch vorlicher als Querab auf die weiteren zum Rotorblatt 110 gehörigen Anströmelemente 111, 112, 113, 114, 115 auf. Die das Rotorblatt 110 anströmende Windkomponente v2 kann durch die Beabstandung der Anströmelemente 111, 112, 113, 114, 115 durch die Spalte auf die jeweiligen Vorderkanten 151 einwirken und durch die dynamische Strömungswirkung den Rotor 100 in Antriebsrichtung ziehen.

Gleichzeitig wirkt im Beispiel in Fig. 2 die Windkomponente v2 auch auf die Strömungselemente als Ganzes ein, die die dynamische Strömungsform 160 bilden. Dadurch kann der Wirkungsgrad nochmals verbessert werden.

Fig. 3 zeigt ein schematisches Diagramm eines Systems 10 mit einem Rotor 100, einer elektrischen Maschine 200 und einer Steuerungseinheit 300. Die Rotorwelle M ist über eine mechanische Verbindungswelle 250 mit einer Maschinenwelle (nicht dargestellt) der elektrischen Maschine 200 verbunden. Die Verbindungswelle 250 kann auch von einer aus Rotorwelle M und Maschinenwelle gebildet werden. Des Weiteren ist eine Steuerungseinheit signaltechnisch mit der elektrischen Maschine 200 verbunden und so konfiguriert, dass sie die Drehzahl der Verbindungswelle 250, der Maschinenwelle und/oder der Rotorwelle M erfasst und die elektrische Maschine 200 wahlweise im generatorischen Betrieb und im motorischen Betrieb ansteuert. Wenn die erfasste Drehzahl über einen vorgegebenen Zeitraum einen vorgegebenen Schwellenwert unterschreitet, steuert die Steuerungseinheit 300 die elektrische Maschine 200 im motorischen Betrieb an.

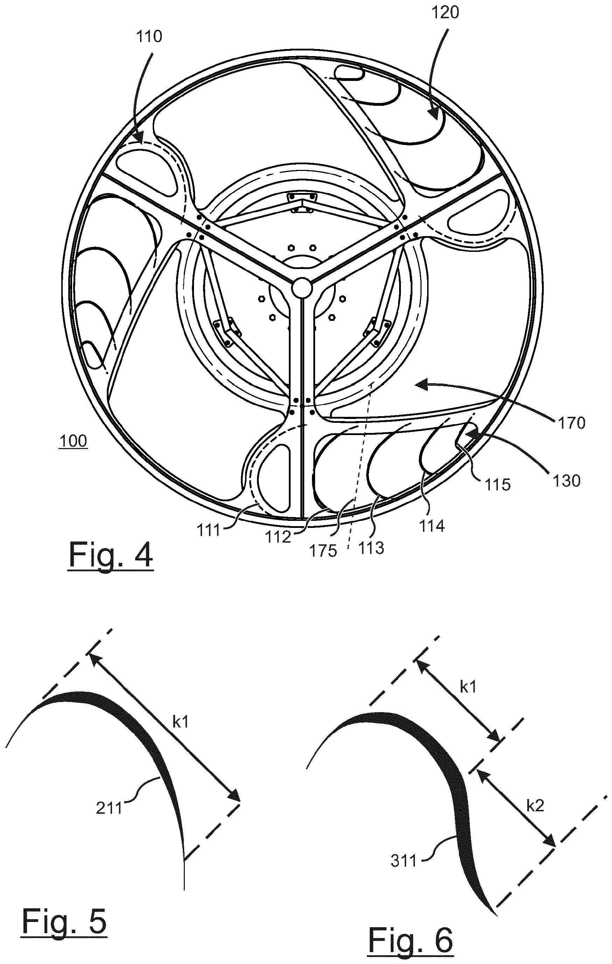

Fig. 4 zeigt eine Schnittansicht analog zu Fig. 1 und Fig. 2 eines Rotors 100 mit Rotorblättern 110, 120, 130 gemäß der Ausführungsform. Die obigen Beschreibungen, die im Zusammenhang mit den Fig. 1-3 erfolgt sind, gelten auch für Fig. 4, und wiederholte Beschreibungen sind hier weggelassen. In Fig. 4 ist erkennbar, dass die Anströmelemente so ausgebildet und beabstandet sind, dass ein hindernisfreier Durchlass entlang einer geraden Linie 175 in den Rotor-Innenbereich 170 besteht. In Fig. 4 ist dies beispielhaft für die Anströmelemente 112, 113 des Rotorblatts 130 gezeigt; dieses Konzept ist aber auf sämtliche Anströmelemente anwendbar sämtlicher Rotorblätter anwendbar. Dies kann zu einer vorteilhaften Ausnutzung möglicher Verwirbelungen der angreifenden Windkomponente beitragen.

Fig. 5 zeigt ein Anströmelement 211 mit einem Haupt-Kraftübertragungsbereich k1, in welchem eine anströmende Windkomponente den größten Teil ihrer Kraft, beispielsweise mehr als 80% der theoretisch möglichen Kraft, auf das jeweilige Anströmelement 211 überträgt. Die Materialstärke des Anströmelements 211 nimmt von dessen äußeren Punkten in Richtung auf die Mitte stetig zu, so dass sich im Wesentlichen eine Stromlinienform ergibt.

Fig. 6 zeigt ein Anströmelement 311 mit einem Haupt-Kraftübertragungsbereich k1 und einem Kraftübertragungs-Auslaufbereich k2. Der Übergang zwischen den Krümmungsrichtungen vom Haupt-Kraftübertragungsbereich k1 zum Kraftübertragungs-Auslaufbereich k2 verläuft in jedem Punkt differenzierbar. Ein derartiger Kraftübertragungs-Auslaufbereich k2 kann dazu beitragen, dass den Antrieb störende Verwirbelungen der auftreffenden Windkomponente noch weiter reduziert werden und/oder dass den Antrieb begünstigende Verwirbelungen der auftreffenden Windkomponente noch weiter verstärkt werden.

## Patentansprüche

1. Rotor (100) mit vertikaler Rotorwelle (M) und mehreren in Umfangsrichtung (U) äquidistant angeordneten, gleichartigen Rotorblättern (1 10, 120, 130),
wobei jedes Rotorblatt (110, 120, 130) eine Mehrzahl von in Antriebsrichtung (U) hintereinander beabstandet angeordneten Anströmelementen (111, 112, 113, 114, 115) umfasst, wobei jedes Anströmelement (111, 112, 113, 114, 115) eine Vorderkante (151) in Antriebsrichtung (U) und eine Hinterkante (152) in Antriebsrichtung (152) umfasst, und wobei jede Hinterkante (152) und jede Vorderkante (151) zumindest in einem Haupt-Kraftübertragungsbereich (k1) jeweils so geformt ist, dass sie jeweils bei Anströmung von einer Windkomponente (v1, v2) eine in Antriebsrichtung (U) wirkende Antriebskraft auf den Rotor (100) überträgt,
wobei jede Vorderkante (151) eine Form aufweist, die eine dynamische Strömungsform zumindest eines Teils des Rotorblatts beschreibt, derart, dass die Vorderkante dann, wenn die Windkomponente aus einer Richtung vorlicher als die Querabrichtung des Rotorblattes anströmt, die Antriebskraft durch einen dynamischen Strömungseffekt, typischerweise dynamischen Auftriebseffekt, auf den Rotor (100) überträgt, wobei eine Einhüllende (160) der Mehrzahl von Anströmelementen (111, 112, 113, 114, 115) mit einer Einhüllenden-Außenseite (168) und einer Einhüllenden-Innenseite (169) die dynamische Strömungsform des Rotorblatts (110, 120, 130) beschreibt,
wobei jede Vorderkante (151) im Haupt-Kraftübertragungsbereich (k1) eine in Antriebsrichtung konvexe Fläche, beschreibt und die Hinterkante (152) im Haupt-Kraftübertragungsbereich (k1) eine in Antriebsrichtung konkave Fläche beschreibt, wobei die konkave Fläche der Vorderkante (151) und die konvexe Fläche der Hinterkante (152) jeweils durchgehend gewölbt sind, so dass sie jeweils im Wesentlichen an jedem Ort differenzierbare Flächen beschreiben,
wobei die Einhüllenden-Außenseite (168) zwischen der Mehrzahl von Anströmelementen (111, 112, 113, 114, 115) in jedem Punkt einen konstanten radialen Abstand (R1, R2) aufweist, und
wobei sämtliche Rotorblätter (110, 120, 130) des Rotors (100) gleichartig konfiguriert sind.

2. Rotor (100) nach Anspruch 1, wobei sämtliche Anströmelemente (111, 112, 113, 114, 115) jedes Rotorblatts (110, 120, 130) an der Einhüllenden-Außenseite (168) mit konstantem radialem Abstand am Rotor-Äußeren entlang verlaufen.

3. Rotor (100) nach Anspruch 1 oder 2, wobei die Hinterkante (152) jedes Antrömelements (111, 112, 113, 114, 115) jedes Rotorblatts (110, 120, 130) eine Angriffsfläche für die Windkomponente (v1) aufweist, deren Flächeninhalt größer ist als eine planare Fläche durch das Anströmelement (111, 112, 113, 114, 115) in Radialrichtung.

4. Rotor (100) nach einem der Ansprüche 1 bis 3, wobei die Mehrzahl der Anströmelemente (111, 112, 113, 114, 115) jedes Rotorblatts (110, 120, 130) jeweils eine von deren äußeren und inneren Enden zur Mitte des jeweiligen Anströmelements (111, 112, 113, 114, 115) zunehmende Materialstärke aufweisen.

5. Rotor (100) nach einem der vorhergehenden Ansprüche, wobei die Anströmelemente (111, 112, 113, 114, 115) jedes Rotorblatts (110, 120, 130) derart in Antriebsrichtung hintereinander angeordnet sind, dass in Umfangsrichtung zwischen zwei benachbarten Anströmelementen (111, 112, 113, 114, 115) desselben jeweiligen Rotorblatts (110, 120, 130) ein Spalt mit einer jeweiligen Spaltbreite (d1, d2, d3, d4) ausgebildet ist, wobei die Spaltbreite ein Eingreifen der Windkomponente (v1, v2) zwischen den benachbarten Anströmelementen ermöglicht.

6. Rotor (100) nach Anspruch 5, wobei sämtliche benachbarte Anströmelemente (111, 112, 113, 114, 115) desselben jeweiligen Rotorblatts (110, 120, 130) derart geformt sind und eine derartige Spaltbreite (d1, d2, d3, d4) aufweisen, dass ein hindernisfreier geradliniger Durchlass (175) in einen Rotor-Innenbereich (170) besteht.

7. Rotor (100) nach einem der vorhergehenden Ansprüche, wobei sämtliche Anströmelemente (111, 112, 113, 114, 115) desselben Rotorblatts (110, 120, 130) ferner einen Kraftübertragungs-Auslaufbereich (k2) mit einer zu dem Haupt-Kraftübertragungsbereich (k1) entgegengesetzten Krümmungsrichtung aufweisen, wobei der Übergang zwischen den Krümmungsrichtungen vom Haupt-Kraftübertragungsbereich (k1) zum Kraftübertragungs-Auslaufbereich (k2) typischerweise in jedem Punkt differenzierbar verläuft.

8. Rotor (100) nach einem der vorhergehenden Ansprüche, wobei zumindest eines aus der folgenden Gruppe an im Regelbetrieb zu erwartende Strömungsbedingungen an einem Installationsort und/oder an eine Größe des Rotorblattes angepasst ist: Spaltbreite zwischen zwei benachbarten Anströmelementen; Verlauf unterschiedlicher Spaltbreiten zwischen einer Mehrzahl benachbarter Anströmelemente; Krümmungsradius eines Anströmelements; Verlauf unterschiedlicher Krümmungsradien einer Mehrzahl von Anströmelementen; Anzahl der Anströmelemente pro Rotorblatt.

9. Rotor (100) nach einem der vorhergehenden Ansprüche, wobei die Anströmelemente (111, 112, 113, 114, 115) jedes Rotorblatts (110, 120, 130), aus einem Metallmaterial gebildet sind.

10. Rotor (100) nach einem der vorhergehenden Ansprüche, wobei die Anzahl der Rotorblätter (110, 120, 130) an im Regelbetrieb zu erwartende Strömungsbedingungen an einem Installationsort und/oder an eine Größe des Rotorblattes angepasst ist.

11. System (10) mit einem Rotor (100) nach einem der vorhergehenden Ansprüche und einer elektrischen Maschine (200), wobei die Rotorwelle (M) des Rotors mechanisch an eine Maschinenwelle der elektrischen Maschine (200) gekoppelt ist.

12. System (10) nach Anspruch 11, das ferner eine Steuerungseinheit (300) zum Erfassen einer Drehzahl der Maschinenwelle und/oder der Rotorwelle und zum Ansteuern der elektrischen Maschine wahlweise im generatorischen Betrieb und im motorischen Betrieb umfasst, wobei die Steuerungseinheit so konfiguriert ist, dass sie die elektrische Maschine (200) dann, wenn die erfasste Drehzahl über einen vorgegebenen Zeitraum einen vorgegebenen Schwellenwert unterschreitet, im motorischen Betrieb ansteuert.

## Claims

1. A rotor (100) having a vertical rotor shaft (M) and multiple rotor blades (110, 120, 130) that are arranged equidistantally in the circumferential direction and are of a uniform type,
wherein each rotor blade (110, 120, 130) comprises a plurality of streaming elements (111, 112, 113, 114, 115) that are arranged successively and at a distance in the direction of driving (U), wherein each streaming element (111, 112, 113, 114, 115) comprises a front edge (151) in the direction of driving and a rear edge (152) in the direction of driving (152), and wherein each rear edge (152) and each front edge (151) - at least in a main power transmission region (k1) - are each formed such that, when streamed against by a wind component (v1, v2), it transmits a driving force to the rotor (100) in the direction of driving (U),
wherein each front edge (151) has a shape that describes a dynamic stream shape of at least a part of the rotor blade, such that the front edge, when the wind component streams against from a direction that is more to the fore than the abeam direction of the rotor blade, transmits the driving force via a dynamic stream effect, typically dynamic lift effect, to the rotor (100), wherein an envelope (160) of the plurality of stream elements (111, 112, 113, 114, 115) having an envelope outer side (168) and an envelope inner side (169) describes the dynamic stream shape of the rotor blade (110, 120, 130),
wherein each front edge (151) describes a convex surface in the direction of driving in the main power transmission region (k1) and the rear edge (152) describes a concave surface in the direction of driving in the main power transmission region (k1), wherein the concave surface of the front edge (151) and the convex surface of the rear edge (152) each are continuously curved such that they substantially describe differentiable surfaces at each location,
wherein the envelope outer side (168), between the plurality of stream elements (111, 112, 113, 114, 115), has at each point a constant radial distance (R1, R2), and
wherein all rotor blades (110, 120, 130) of the rotor (100) are configured to be of a uniform type.

2. The rotor (100) according to claim 1, wherein all streaming elements (111, 112, 113, 114, 115) of each rotor blade (110, 120, 130) extend, on the envelope outer side (168), with a constant radial distance along the exterior of the rotor.

3. The rotor (100) according to claim 1 or 2, wherein the rear edge (152) of each streaming element (111, 112, 113, 114, 115) of each rotor blade (110, 120, 130) comprises a working surface for the wind component (v1) whose surface area is greater than a planar surface through the streaming element (111, 112, 113, 114, 115) in the radial direction.

4. The rotor (100) according to any one of claims 1 through 3, wherein the plurality of streaming elements (111, 112, 113, 114, 115) of each rotor blade (110, 120, 130) each comprise a material thickness that rises from the outer and inner ends to the center of the respective streaming element (111, 112, 113, 114, 115).

5. The rotor (100) according to any one of the preceding claims, wherein the streaming elements (111, 112, 113, 114, 115) of each rotor blade (110, 120, 130) are arranged successively in the direction of driving such that in the circumferential direction between two adjacent streaming elements (111, 112, 113, 114, 115) of a same respecitve rotor blade (110, 120, 130) a gap having a respective gap width (d1, d2, d3, d4), is formed, wherein the gap width enables an acting of the wind component (v1, v2) between the adjacent streaming elements.

6. The rotor (100) according to claim 5, wherein all adjacent streaming elements (111, 112, 113, 114, 115), of the same respective rotor blade (110, 120, 130) are shaped and have a gap width (d1, d2, d3, d4) such that an obstacle-free straight-ligned passage (175) is formed into a rotor inner region (170).

7. The rotor (100) according to any one of the preceding claims, wherein all streaming elements (111, 112, 113, 114, 115) of the same rotor blade (110, 120, 130) further comprise a force transmission discontinuation region (k2) having a direction of curvature opposite to the main power transmission region (k1), wherein a transition of the directions of curvature from the main power transmission region (k1) to the force transmission discontinuation region (k2) typically extends, in each point, in a differentiable manner.

8. The rotor (100) according to any one of the preceding claims, wherein at least one of the following group is adapted to the streaming conditions to be expected during normal operation and/or adapted to a size of the rotor blade: Gap width between two adjacent streaming elements; progression of different gap widths between multiple adjacent streaming elements; progression of different radii of curvature of multiple streaming elements; number of streaming elements per rotor blade.

9. The rotor (100) according to any one of the preceding claims, wherein the streaming elements (111, 112, 113, 114, 115) of each rotor blade (110, 120, 130) are formed of a metal material.

10. The rotor (100) according to any one of the preceding claims, wherein the number of rotor blades (110, 120, 130) is adapted to the streaming conditions to be expected during normal operation and/or adapted to a size of the rotor blade.

11. A system (10) having a rotor (100) according to any one of the preceding claims and an electric machine (200), wherein the rotor shaft (M) of the rotor is mechanically coupled to a machine shaft of the electric machine (200).

12. The system (10) according to claim 11, further comprising a control unit (300) for obtaining a rotational speed of the machine shaft and/or of the rotor shaft and for controlling the electric machine selectively in generator operation and motor operation, wherein the control unit is configured such that it controls the electric machine (200) in the motor operation when the obtained rotational speed falls below a predetermined threshold for a predetermined period.

## Revendications

1. Rotor (100) comprenant un arbre de rotor (M) vertical et comprenant plusieurs pales de rotor (110, 120, 130) homogènes disposées équidistantementes,
selon lequel chaque pale de rotor (110, 120, 130) comprend plusieurs composants de soufflage (111, 112, 113, 114, 115) arrangés l'un derrière l'autre à une distance en sens de mouvement (U), chaque composant de soufflage (111, 112, 113, 114, 115) comprenant un bord avant (151) en sens de mouvement (U) et un bord arrière (152) en sens de mouvement (U), et chaque bord arrière (152) et chaque bord avant (151) étant respectivement formée, au moins à une zone principale de transmission de force (k1), de manière à ce qu'il transmit une force de propulsion au rotor (100) opérante en sens de mouvement (U) quand il est soufflé par une composante de vent (v1, v2),
selon lequel chaque bord avant (151) présente une forme qui engendre une forme aérodynamique d'au moins une part de la pale de rotor, de telle manière que le bord avant, si la composante de vent souffle d'une direction plus avant que la direction traverse de la composante de vent, transmit la force de propulsion par un effet courant dynamique, de manière typique un effet de sustentation dynamique, au rotor (100), selon lequel une enveloppante (160) des plusieurs composants de soufflage (111, 112, 113, 114, 115) engendre, par une face externe (168) de l'enveloppante et une face interne (169) de l'enveloppante, la forme aérodynamique de la pale de rotor (110, 120, 130),
selon lequel chaque bord avant (151) engendre, à la zone principale (k1) de transmission de force, une face convexe dans le sens de mouvement, et le bord arrière (152) engendre, à la zone principale (k1) de transmission de force, une face concave dans le sens de mouvement, selon lequel la face convexe du bord avant (151) et la face concave du bord arrière (152) sont chacun courbés continus de manière à ce qu'ils engendrent des faces différenciables essentiellement à chaque lieu,
selon lequel la face externe (168) de l'enveloppante entre les plusieurs composants de soufflage (111, 112, 113, 114, 115) présente, à chaque point, une distance radiale (R1, R2) constante, et
selon lequel toutes les pales de rotor (110, 120, 130) du rotor (100) sont configurées de manière homogène.

2. Rotor (100) selon la revendication 1, selon lequel toutes les composants de soufflage (111, 112, 113, 114, 115) de chaque pale de rotor (110, 120, 130) à la face externe (168) de l'enveloppante s'étendent le long l'extérieur du rotor en distance radiale constante.

3. Rotor (100) selon la revendication 1 ou 2, selon lequel le bord arrière (152) de chaque composant de soufflage (111, 112, 113, 114, 115) de chaque pale de rotor (110, 120, 130) comprend une surface d'attaque pour la composante de vent (v1) dont l'aire est plus grande qu'une aire planaire par le composant de soufflage (111, 112, 113, 114, 115) en sens radial.

4. Rotor (100) selon l'une quelconque des revendications 1 à 3, selon lequel les plusieurs composants de soufflage (111, 112, 113, 114, 115) de chaque pale de rotor (110, 120, 130) présentent une épaisseur de matière qui s'accroit de leurs bouts externes et internes vers le centre du composant de soufflage (111, 112, 113, 114, 115) respectif.

5. Rotor (100) selon l'une quelconque des revendications précédentes, selon lequel les composants de soufflage (111, 112, 113, 114, 115) de chaque pale de rotor (110, 120, 130) sont arrangés l'un derrière l'autre à la manière que, en sens de circonférence, entre des deux composants de soufflage (111, 112, 113, 114, 115) avoisinés de la même pale de rotor (110, 120, 130) respective, un interstice comprenant une largeur (d1, d2, d3, d4) d'interstice respective est formée, la largeur d'interstice permettant une entrée en action de la composante de vent (v1, v2) entre les composants de soufflage avoisinés.

6. Rotor (100) selon la revendication 5, selon lequel tous les composants de soufflage (111, 112, 113, 114, 115) avoisinés de la même pale de rotor (110, 120, 130) respective sont formés et présentent une largeur (d1, d2, d3, d4) d'interstice de telle manière qu'il existe un passage (175) libre d'empêchement vers un intérieur (170) du rotor.

7. Rotor (100) selon l'une quelconque des revendications précédentes, selon lequel tous les composants de soufflage (111, 112, 113, 114, 115) de chaque pale de rotor (110, 120, 130) comprennent une zone (k2) d'amortissement de transmission de force présentent un sens de courbure opposé de la zone (k1) principale de transmission de force, selon lequel la transition de la zone (k1) principale de transmission de force vers la zone (k2) d'amortissement de transmission, de manière typique, s'étend différenciablement à chaque lieu.

8. Rotor (100) selon l'une quelconque des revendications précédentes, selon lequel au moins un élément du groupe suivant est adapté aux conditions de soufflage prévues en service régulier au lieu de montage et/ou à une grandeur de la pale de rotor : Largeur d'interstice entre deux composants de soufflage avoisinés; tracé des largeurs d'interstice différentes entre plusieurs composants de soufflage avoisinés ; rayon de courbure d'un composant de soufflage ; tracé des rayons de courbure différents de plusieurs composants de soufflage; nombre de composants de soufflage par pale de rotor.

9. Rotor (100) selon l'une quelconque des revendications précédentes, selon lequel les composants de soufflage (111, 112, 113, 114, 115) de chaque pale de rotor (110, 120, 130) sont formés d'une matière métallique.

10. Rotor (100) selon l'une quelconque des revendications précédentes, selon le nombre de pales de rotor (110, 120, 130) est adapté aux conditions de soufflage prévues en service régulier au lieu de montage et/ou à une grandeur de la pale de rotor.

11. Système (10) comprenant un rotor (100) selon l'une quelconque des revendications précédentes et une machine électrique (200), selon lequel l'arbre de rotor (M) du rotor est couplé de manière mécanique à l'arbre de machine de la machine électrique (200).

12. Système (10) selon la revendication 11, comprenant en outre une unité de commande (300) pour saisir uns nombre de tours de l'arbre de machine et/ou de l'arbre de rotor et pout commander la machine électrique, en option, en service générateur et en service moteur, selon lequel l'unité de commande es configurée à telle manière qu'elle commande la machine électrique (200) en service moteur quand le nombre de tours saisi, durant un intervalle de temps prédéfini, dépasse une valeur de seuil prédéfinie.
